# EUROPÄISCHE PATENTSCHRIFT

(11) **EP 3 183 159 B1**
(45) Veröffentlichungstag und Bekanntmachung des Hinweises auf die Patenterteilung: **26.12.2018**
(21) Anmeldenummer: 15734201.5
(22) Anmeldetag: 07.07.2015
(51) Int. Cl.: B62D 1/19, B62D 1/184, B62D 1/185

(54) **LENKSÄULE FÜR EIN KRAFTFAHRZEUG**
STEERING CLOLUMN FOR A VEHICLE
COLONNE DE DIRECTION POUR UNE VOITURE

(30) Priorität: 18.08.2014 DE 102014111775
(43) Veröffentlichungstag der Anmeldung: 28.06.2017
(73) Patentinhaber: ThyssenKrupp Presta AG, 9492 Eschen (LI); thyssenkrupp AG, 45143 Essen (DE)
(72) Erfinder: SCHIELE, Emanuel, 88131 Lindau (DE); DE CASTRO RIEMANN, Felix, A-6800 Feldkirch (AT)
(74) Vertreter: thyssenkrupp Intellectual Property GmbH
(86) Internationale Anmeldenummer: PCT/EP2015/065463
(87) Internationale Veröffentlichungsnummer: WO 2016/026608

(56) Entgegenhaltungen:
- WO-A1-2012/079096
- US-A- 5 755 461
- US-A1- 2008 111 363
- US-A1- 2012 080 873

## Beschreibung

### Technisches Gebiet

Die vorliegende Erfindung betrifft eine Lenksäule für ein Kraftfahrzeug, welche eine mit dem Chassis des Kraftfahrzeugs verbundene Halteeinrichtung und eine im Crash-Fall relativ zu der Halteeinrichtung entlang einer Verschiebeachse verschiebbare Verlagerungseinrichtung aufweist.

### Stand der Technik

Aus dem Stand der Technik sind Lenksäulen für Kraftfahrzeuge bekannt, bei welchen eine mit dem Chassis des Kraftfahrzeugs verbundene Halteeinrichtung vorgesehen ist, an welcher eine relativ zu der Halteeinrichtung verschiebbare Verlagerungseinrichtung vorgesehen ist, die sich im Crash-Fall entlang einer Verschiebeachse verschieben lässt. Zwischen der Halteeinrichtung und der Verlagerungseinrichtung ist üblicherweise ein Deformationselement vorgesehen, welches sowohl an der Halteeinrichtung als auch an der Verlagerungseinrichtung festgelegt ist. Das Deformationselement weist einen Deformationsbereich auf, welcher bei einer Relativverschiebung der Verlagerungseinrichtung relativ zur Halteeinrichtung deformiert wird und auf diese Weise Crash-Energie aufnehmen kann.

Durch diese Konstruktion einer Lenksäule ist es möglich, die vom Fahrer auf das Lenkrad aufgebrachte Crash-Energie bei einem Unfall definiert zu absorbieren, da durch die Deformation des Deformationselements die Crash-Energie in Verformungsenergie übergeht. Entsprechend kann die Sicherheit der Lenksäule verbessert werden, da vom Fahrer auf das Lenkrad eingetragene Crash-Energie weiter abgebaut werden kann. Auf diese Weise wird auch das Lenkrad weiter aus der Gefahrenzone herausbewegt.

Deformationselemente mit Deformationsabschnitten sind prinzipiell bekannt. Die Deformationsabschnitte können dabei entweder als reine Deformationsabschnitte oder als Biegereißdeformationsabschnitte vorgesehen sein.

Eine teleskopierbare Lenksäule mit einem als Biegereißlasche ausgebildeten Deformationselement ist beispielsweise aus der DE 1 962 183 A bekannt, wobei die Biegereißlasche hier im Wesentlichen koaxial zur Verlagerungseinrichtung vorgesehen ist. Ein Aufrollen des Deformationsabschnittes tritt entsprechend so auf, dass sich der Deformationsabschnitt der Biegereißlasche in Radialrichtung zur Verschiebeachse ausdehnt. Entsprechend muss ein hinreichend großer Bauraum bereitgestellt werden, um die Deformation der Biegelasche auch im Crash-Fall definiert ablaufen zu lassen und eine Kollision der sich verformenden Biegereißlasche mit anderen Fahrzeugkomponenten zu verhindern.

Aus der US 4,915,412 ist eine teleskopierbare Lenksäule bekannt, bei welcher sich zwischen Konsole und Mantelrohr eine Biegereißlasche befindet, welche in einem komplizierten Montageprozess montiert werden muss, da sich die Klemmachse durch die Biegereißlasche hindurch erstreckt.

Eine teleskopierbare Lenksäule ist bekannt, bei welcher ein Deformationsabschnitt in die Konsole, also der Halteeinrichtung, integriert ist. Da für die Konsole gefordert ist, dass diese möglichst steif ist, für den Deformationsabschnitt jedoch ein definiertes Deformationsverhalten gefordert ist, widersprechen sich die an das eine Bauteil gestellten Anforderungen, so dass eine Anpassung an unterschiedliche Fahrzeugtypen schwierig ist Aus US 2008/111363 A1 ist eine Lenksäule nach dem Oberbegriff des Anspruchs 1 bekannt.

### Darstellung der Erfindung

Ausgehend von dem bekannten Stand der Technik ist es eine Aufgabe der vorliegenden Erfindung, eine Lenksäule für ein Kraftfahrzeug bereitzustellen, welche ein einfach zu montierendes und an unterschiedliche Kraftfahrzeugtypen anpassbares Deformationselement umfasst.

Diese Aufgabe wird durch eine Lenksäule für ein Kraftfahrzeug mit den Merkmalen des Anspruchs 1 gelöst. Vorteilhafte Weiterbildungen ergeben sich aus den Unteransprüchen.

Entsprechend wird eine Lenksäule für ein Kraftfahrzeug vorgeschlagen, welche eine mit dem Chassis des Kraftfahrzeugs verbindbare Halteeinrichtung und eine im Crash-Fall relativ zur Halteeinrichtung entlang einer Verschiebeachse verschiebbare Verlagerungseinrichtung zur Aufnahme einer Lenkspindel aufweist, wobei ein Deformationselement mit der Halteeinrichtung und der Verlagerungseinrichtung über einen jeweiligen Anbindungsabschnitt mit jeweiligen Befestigungsmitteln verbunden ist und das Deformationselement einen Deformationsabschnitt aufweist, welcher sich bei der Relativverschiebung der Verlagerungseinrichtung gegenüber der Halteeinrichtung um eine Deformationsache herum deformiert. Erfindungsgemäß ist die Deformationsachse im Wesentlichen parallel zur Richtung der Flächennormalen zumindest eines Anbindungsabschnitts im Zentrum des zugehörigen Befestigungsmittels ausgerichtet, wobei das Deformationselement über einen ersten Anbindungsabschnitt an der Halteeinrichtung und über einen zweiten Anbindungsabschnitt an der Verlagerungseinrichtung angeordnet ist, und der erste Anbindungsabschnitt und/oder der zweite Anbindungsabschnitt senkrecht zur Richtung der Flächennormalen ausgebildet sind.

Die Fläche, in der die Verschiebeachse angeordnet ist und die gleichzeitig senkrecht zur Flächennormalen ausgerichtet ist, wird als Verschiebeebene bezeichnet.

Als Befestigungsmittel kann jegliches bekanntes Mittel zur Lagesicherung wie beispielsweise Löcher, Zapfen, Niete, Schrauben, Bolzen als auch eine stoffschlüssige Verbindung wie beispielsweise Schweißen oder Kleben zum Einsatz kommen.

Dadurch, dass die Deformationsachse im Wesentlichen senkrecht zu der Verschiebeebene angeordnet ist, wird erreicht, dass im Crash-Fall die Deformation beziehungsweise das Abrollen des Deformationselements in seinem Deformationsabschnitt definiert entlang dieser Deformationsachse stattfindet. Die Erstreckung des Deformationselements ändert sich also nicht in "*Radialrichtung*" des Verlagerungselements. In einer Ausführungsform kann die Verschiebeachse mit der Rotationsachse der Lenkspindel, der Lenkspindelachse, zusammenfallen.

Die Verschiebeebene kann mit Vorteil eine im normalen Betriebszustand des Kraftfahrzeugs horizontal ausgerichtete Ebene sein.

Da sich die Deformationsachse aber bereits im Wesentlichen radial zur Verlagerungseinrichtung beziehungsweise zu dessen Verschiebeachse erstreckt, können bestimmte Bauraumanforderungen bei Lenksäulen im Kraftfahrzeug besonders vorteilhaft erfüllt werden.

Unter einer im Wesentlichen parallel zur Richtung der Flächennormalen der Anbindungsabschnitte angeordneten Deformationsachse wird verstanden, dass diese einen Raumwinkel zwischen der Deformationsachse und der Richtung der Flächennormalen von 0° bis 20°, bevorzugt 0° bis 5°, besonders bevorzugt von 0° einschließt.

Auf diese Weise lässt sich weiterhin erreichen, dass das Deformationselement an die jeweilige Spezifikation des Kraftfahrzeuges angepasst werden kann und entsprechend in unterschiedlichen Fahrzeugtypen eingesetzt werden kann, ohne dass für diese Anpassung bauliche Änderungen an der Verlagerungseinrichtung oder der Halteeinrichtung durchgeführt werden müssten. Durch die Anordnung der Deformationsachse parallel zur Richtung der Flächennormalen kann entsprechend ein Deformationselement so ausgelegt werden, dass über die Materialstärke, das Material und die Geometrie des Deformationsabschnittes beziehungsweise des Biegereißabschnittes die Energieabsorptionskennung des Deformationselements und damit die Energieabsorptionskennung bei der Verschiebung der Verlagerungseinrichtung gegenüber der Halteeinrichtung in Richtung der Verschiebeachse an jeden Fahrzeugtyp angepasst werden kann.

Es lässt sich entsprechend eine sehr kompakte Bauform der Lenksäule bei dennoch vollständiger Einstellbarkeit der Energieabsorptionskennung erreichen.

Weiterhin ermöglicht es die Anordnung der Deformationsachse im Wesentlichen parallel zur Richtung der Flächennormalen, dass sich die Kraftangriffspunkte an der Verlagerungseinrichtung sowie an der Halteeinrichtung unmittelbar neben dem Deformationsabschnitt befinden können, so dass auch auf diese Weise eine kompakte Ausprägung des Deformationselements ermöglicht ist.

Bevorzugt ist die Deformationsachse so ausgebildet, dass sie sich während der Verschiebung der Verlagerungseinrichtung relativ zur Halteeinrichtung in Richtung der Verschieberichtung bewegt, wobei sie im Wesentlichen parallel zur Richtung der Flächennormalen angeordnet bleibt. Unter "*im Wesentlichen parallel*" wird hier eine Ausrichtung der Achsen zueinander unter einem Winkel von höchstens +- 10°, +-5° bevorzugt aber genau parallel zueinander verstanden. Mit anderen Worten bewegt sich die Deformationsachse bei einer Verschiebung der Verlagerungseinrichtung gegenüber der Halteeinrichtung in Richtung der Fahrzeugfront. Da der Deformationsabschnitt um die Deformationsachse herum abgewickelt wird, bewegt sich die Deformationsachse etwa mit halber Verschiebegeschwindigkeit in Richtung der Fahrzeugfront.

Das Deformationselement ist besonders bevorzugt als Biegereißelement ausgebildet, welches einen Deformationsabschnitt hat, welcher gegenüber einem feststehenden Abschnitt des Deformationselements einreißt und gleichzeitig verformt wird. Auf diese Weise lässt sich ein definiertes Verhalten des Deformationselements in im Prinzip bekannter Weise auch für das hier vorgeschlagene Deformationselement erreichen.

Bevorzugt ist das Deformationselement über zumindest einen ersten Anbindungsabschnitt an der Halteeinrichtung und über zumindest einen zweiten Anbindungsabschnitt an der Verlagerungseinrichtung angeordnet, wobei zumindest die Richtung der Flächennormalen des ersten Anbindungsabschnitts und/oder des zweite Anbindungsabschnitts orthogonal zur Verschiebeebene ausgebildet ist. Mit Vorteil sind dabei mehrere, besonders bevorzugt zwei, erste Anbindungsabschnitte vorgesehen, die bevorzugt in einer gemeinsamen Ebene liegen. Auf diese Weise ergibt sich ein einfach zu montierendes Deformationselement, welches, aufgrund der gleichen Ausrichtung der Anbindungsabschnitte an Verlagerungseinrichtung und Halteeinrichtung, einfach zwischen Halteeinrichtung und Verlagerungseinrichtung eingebaut und dann festgelegt werden kann. Bei Bedarf können auch mehrere zweite Anbindungsabschnitte vorgesehen sein.

In einer weiteren Ausführungsform sind der eine erste Anbindungsabschnitt oder alle der ersten Anbindungsabschnitte und der zweite Anbindungsabschnitt in einer gemeinsamen Ebene angeordnet. Diese Ebene ist in der Ausführungsform parallel zur Verschiebeebene ausgerichtet.

In einer besonders bevorzugten Ausgestaltung sind alle vorhandenen ersten Anbindungsabschnitte und zumindest ein einzelner zweiter Anbindungsabschnitt jeweils in einer parallel und zueinander ausgerichteten Ebene angeordnet, wodurch eine vorteilhafte Montage erreicht wird. Diese Ebene ist in der besonders bevorzugten Ausführungsform parallel zur Verschiebeebene ausgerichtet.

Der Deformationsabschnitt ist bevorzugt um die Deformationsachse herum auf sich selbst zurückgebogen und weist einen inneren Bereich und einen äußeren Bereich auf, welche einander gegenüber liegen und welche parallel zu einer durch die Deformationsachse und die Verschiebeachse aufgespannten Ebene liegen. Mit anderen Worten ist der Deformationsabschnitt U-förmig ausgebildet und wird im Verformungsfall um eine gedachte Achse, die Deformationsachse, herum verformt. Diese Deformationsachse ist nicht gegenständlich ausgebildet und bewegt sich im Verformungsfall in Richtung der Deformation des Deformationsabschnitts. Auf diese Weise wird eine platzsparende Ausbildung des Deformationselements erreicht, welches entsprechend eine senkrecht zur Verschiebeebene angeordnete Deformationsachse aufweist. Durch diese Ausprägung des Deformationsabschnitts liegen die ersten und zweiten Anbindungsabschnitte in Richtung der Verschiebeachse im Wesentlichen nebeneinander.

In einer weiteren bevorzugten Ausbildung sind zwei Deformationsabschnitte vorgesehen, welche beide an dem zweiten Anbindungsabschnitt angebunden sind und jeweils einen ersten Anbindungsabschnitt aufweisen. So kann eine symmetrische Ausbildung des Deformationselements erreicht werden, welche eine gleichmäßige Führung der Verlagerungseinrichtung gegenüber der Halteeinrichtung ermöglicht. Dabei sind besonders bevorzugt die beiden Deformationsabschnitte parallel zueinander ausgerichtet und der erste Anbindungsabschnitt und der zweite Anbindungsabschnitt sind senkrecht zu den durch die Deformationsabschnitte ausgebildeten Ebenen angeordnet.

Eine besonders kompakte Ausbildung ergibt sich, wenn der Deformationsabschnitt senkrecht zur Verschieberichtung neben dem ersten Anbindungsabschnitt und dem zweiten Anbindungsabschnitt angeordnet ist. Mit anderen Worten liegen die beiden Anbindungsabschnitte im Wesentlichen nebeneinander und der Deformationsabschnitt ist dazwischen angeordnet.

Besonders bevorzugt weist der erste Anbindungsabschnitt und/oder der zweite Anbindungsabschnitt Formschlussausnehmungen als Befestigungsmittel wie beispielsweise Löcher oder Aussparungen auf, welche mit dazu komplementären Formschlusselementen wie beispielsweise Bolzen, Zapfen oder Schrauben der Halteeinrichtung und/oder der Verlagerungseinrichtung in Eingriff stehen. Der Formschluss kann so ausgebildet sein, dass er lediglich bei einer Verschiebung der Verlagerungseinrichtung relativ zur Halteeinrichtung in Richtung der Verschiebeachse im Crash-Fall sperrt. Dabei kann der Formschluss mit viel Spiel bereitgestellt sein, wodurch die Toleranzanforderungen an die Bauteile gesenkt werden. So können beispielsweise Gussrippen oder einfache Ausstanzungen zur Bildung der den Formschluss bildenden Elemente dienen.

Das Deformationselement weist weiterhin in einer bevorzugten Ausbildung Rastelemente auf, welche mit einem Sperrhaken einer Längsverstellung einer verstellbaren, teleskopierbaren Lenksäule in Eingriff bringbar sind, so dass in den unterschiedlichen Längspositionen der Verlagerungseinrichtung relativ zur Halteeinrichtung stets der gleiche Verschiebeweg durch das Deformationselement zurückgelegt werden kann, um entsprechend in jeder Längsposition der teleskopierbaren Lenksäule ein definiertes Crash-Verhalten bereitzustellen.

In einer weiteren bevorzugten Ausbildung ist das Deformationselement an der verschiebbaren Verlagerungseinrichtung über eine Anbindung an einen Klemmmechanismus, insbesondere eine Klemmachse, vorgesehen, um auf diese Weise ebenfalls eine einfache Montage der Lenksäule zu erreichen.

Des Weiteren kann das Deformationselement ebenfalls mit der Schwenkachse einer zumindest in der der Höhe verstellbaren Lenksäule gekoppelt sein.

Die beschriebene Konstruktion ist sowohl mit mechanisch als auch mit elektrisch verstellbaren Lenksäulen anwendbar. Sie ist ferner auch mit nicht verstellbar ausgebildeten Lenksäulen anwendbar.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische perspektivische Ansicht einer Lenksäule in einem ersten Ausführungsbeispiel;
- Figur 2: eine schematische perspektivische Ansicht der Lenksäule aus Figur 1 in einer auseinandergezogenen Darstellung;
- Figur 3: eine schematische perspektivische Ansicht des Deformationselements der Lenksäule der Figuren 1 und 2;
- Figur 4: eine schematische perspektivische Ansicht eines Deformationselements in einem zweiten Ausführungsbeispiel;
- Figur 5: eine schematische perspektivische Detailansicht der Lenksäule der Figuren 1 bis 3 in einer Ausgangsposition;
- Figur 6: eine schematische perspektivische Detailansicht der Lenksäule der Figur 5 in einer verschobenen Position;
- Figur 7: eine schematische perspektivische Darstellung einer Lenksäule in einem weiteren Ausführungsbeispiel;
- Figur 8: eine schematische perspektivische Darstellung des Deformationselements aus Figur 7;
- Figur 9: eine schematische perspektivische Darstellung eines Deformationselements mit einem Rastmechanismus in einem weiteren Ausführungsbeispiel;
- Figur 10: eine schematische perspektivische Darstellung eines Deformationselements mit einer Klemmvorrichtung in einem weiteren Ausführungsbeispiel.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente mit identischen Bezugszeichen bezeichnet. Um Redundanzen zu vermeiden, wird auf eine wiederholte Beschreibung dieser Elemente in der nachfolgenden Beschreibung teilweise verzichtet.

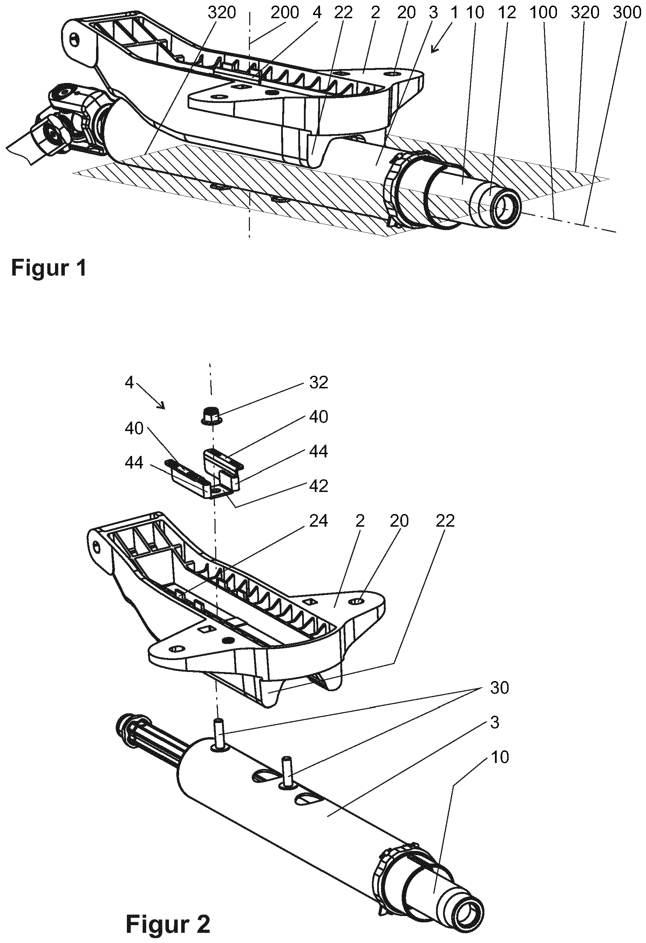

Figur 1 zeigt eine Lenksäule 1, welche eine mit dem Chassis eines Kraftfahrzeugs verbindbare Halteeinrichtung 2 und eine relativ zu der Halteeinrichtung 2 verschiebbare Verlagerungseinrichtung 3 umfasst. In der Verlagerungseinrichtung 3, welche hier als Mantelrohr ausgebildet ist, ist eine Lenkspindel 10 drehbar angeordnet, wobei an dem vorderen Abschnitt 12 der Lenkspindel 10 in bekannter Weise ein nicht dargestelltes Lenkrad anbindbar ist.

Die Halteeinrichtung 2 weist Montageausnehmungen 20 auf, über welche die Halteeinrichtung 2 an dem Chassis des Kraftfahrzeugs anbindbar ist. Die Halteeinrichtung 2 weist weiterhin Seitenwangen 22 auf, welche die Verlagerungseinrichtung 3 teilweise umschließen und an welchen die Verlagerungseinrichtung 3 geführt ist. Die Verlagerungseinrichtung 3 ist relativ zur Halteeinrichtung 2 in Richtung einer Verschiebeachse 300, welche in dem gezeigten Ausführungsbeispiel mit der Lenkspindelachse 100 zusammenfällt, in Richtung der Fahrzeugfront verschiebbar.

Entsprechend kann im Crash-Fall die Verlagerungseinrichtung 3 relativ zur Halteeinrichtung 2 entlang der Verschiebeachse 300 in Richtung der Fahrzeugfront verschoben werden, um zum einen zu erreichen, dass das an der Lenkspindel 10 angebundene Lenkrad aus dem Gefahrenbereich herausgeschoben wird, und zum anderen um einen definierten Verschiebeweg bereitzustellen, entlang dessen eingetragene Crash-Energie weiter abgebaut werden kann. Insbesondere kann hier Crash-Energie abgebaut werden, welche durch einen Fahrer des Kraftfahrzeuges in das Lenkrad eingetragen wird, wenn der Fahrer des Kraftfahrzeuges auf das Lenkrad auftrifft.

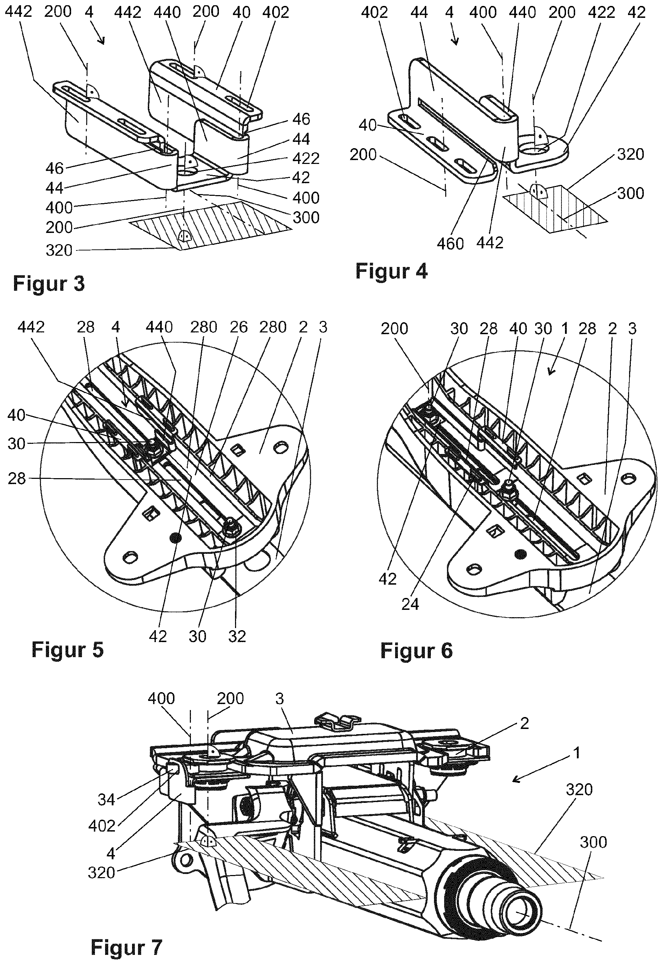

Um eine definierte Verschiebung unter Umwandlung eines großen Teils der Crash-Energie bereitzustellen, ist ein Deformationselement 4 vorgesehen, welches in den Figuren 2 und 3 noch einmal detailliert gezeigt ist.

Das Deformationselement 4 ist über einen ersten Anbindungsabschnitt 40 an der Halteeinrichtung 2 festgelegt und über einen zweiten Anbindungsabschnitt 42 an der Verlagerungseinrichtung 3 angebunden. Entsprechend wird über den ersten Anbindungsabschnitt 40 und den zweiten Anbindungsabschnitt 42 bei einer Relativverschiebung der Verlagerungseinrichtung 3 gegenüber der Halteeinrichtung 2 in Richtung der Verschiebeachse 300 eine entsprechende Kraft auf das Deformationselement 4 ausgeübt, welche zu einer Deformation eines Deformationsabschnittes 44 des Deformationselements 4 führt.

Das Deformationselement 4 ist im gezeigten Ausführungsbeispiel als Biegereißlasche ausgeführt, wobei der Deformationsabschnitt 44 fest mit dem zweiten Anbindungsabschnitt 42 verbunden ist. Das Bauteil ist in der bevorzugten Ausführungsform als Blech-Biege-Stanzteil einstückig hergestellt und umfasst zwei Deformationsabschnitte 44, die parallel zueinander ausgerichtet sind. Besonders bevorzugt umfasst das Deformationsteil 4 zwei erste Anbindungsabschnitte 40, die eben ausgebildet sind, und eine oder mehrere Ausstanzungen (= Formschlussausnehmungen 402) oder Zapfen zur Bildung von Formschlusselementen aufweisen und somit als Befestigungselement dienen. Die Ebenen der ersten und/oder zweiten Anbindungsabschnitte 40, 42 sind dabei bevorzugt parallel zur Verschiebeebene 320 ausgerichtet. Gegenüber dem ersten Anbindungsabschnitt 40 ist der jeweilige Deformationsabschnitt 44 jedoch entlang einer Reißlinie 46 angebunden, welche ein definiertes Reißverhalten bereitstellt. Entsprechend wird bei einer Relativverschiebung des ersten Anbindungsabschnittes 40 gegenüber dem zweiten Anbindungsabschnitt 42, so wie sie beim Eintragen einer Kraft in die Verlagerungseinrichtung 3 im Falle eines Crashs durch die Verschiebung der Verlagerungseinrichtung 3 gegenüber der Halteeinrichtung 2 stattfindet, der Deformationsabschnitt 44 verformt und gleichzeitig das Deformationselement 4 entlang der Reißlinie 46 aufgerissen. Durch die Deformation und das Reißen des auf diese Weise als Biegereißlasche ausgebildeten Deformationselements 4 findet entsprechend eine definierte Energieabsorption mit einer definierten Energieabsorptionskennung des Deformationselements 4 statt. Mit anderen Worten kann über den durch die Verschiebbarkeit des Verlagerungselements 3 gegenüber dem Halteelement 2 vorgegebenen Verschiebeweg entlang der Verschiebeachse 30 die Crash-Energie definiert in Verformungs- und Reißenergie umgewandelt werden. Die genaue Energieabsorptionskennung des Deformationselements 4 kann über die Materialauswahl, die Wahl der Materialstärke sowie die Ausbildung der Reißlinie und der restlichen Geometrie des Deformationselements 4 bereitgestellt werden.

Der Deformationsabschnitt 44 des Deformationselements 4 deformiert sich bei einer Relativverschiebung des zweiten Anbindungsabschnitts 42 gegenüber dem ersten Anbindungsabschnitt 40 um eine Deformationsachse 400 herum. Um die Deformationsachse 400 herum wird der Deformationsabschnitt 44 entsprechend umgeformt beziehungsweise umgebogen, so dass die Deformationsachse 400 in Richtung auf die Fahrzeugfront nach vorne wandert, in ihrer Ausrichtung aber im Wesentlichen parallel zu der Ausgangsausrichtung verbleibt. Der Deformationsabschnitt 44 wickelt sich entsprechend um die Deformationsachse 400 herum ab.

Der Deformationsabschnitt 4 ist um die Deformationsachse 400 herum auf sich selbst zurückgebogen, mit anderen Worten U-förmig ausgebildet, und weist entsprechend einen inneren Bereich 440 und einen äußeren Bereich 442 auf, welche einander gegenüber liegen und welche parallel zu einer durch die Deformationsachse 400 und die Verschiebeachse 300 aufgespannten Ebene liegen.

In dem Deformationselement 4 sind an dem zweiten Anbindungsabschnitt 42 jeweils zwei Deformationsabschnitte 44 direkt angeordnet, welche so parallel zueinander angeordnet sind, dass auch ihre jeweiligen Deformationsachsen 400 parallel zueinander angeordnet sind, wobei sich der an dem zweiten Anbindungsabschnitt 42 angeordnete innere Bereich 440 des Deformationsabschnittes 44 an dem äußeren Bereich 442 abstützen kann, solange der Deformationsabschnitt 44 um die Deformationsachse 400 herum umgeformt wird. Entsprechend findet hier ein definiertes Umformen statt. Weiterhin ist durch die U-förmige Anbindung des Deformationsabschnittes 44 an den zweiten Anbindungsabschnitt 42 und das entsprechende Abstützen des inneren Bereiches 440 am äußeren Bereich 442, welcher ebenfalls in einem 90° Winkel an dem ersten Anbindungsabschnitt 40 angebunden ist, ein sehr stabiles Abstützen des Deformationsabschnittes 44 auch beim Umformen gewährleistet, so dass eine definierte Umformung bei einer geringen Bauraumanforderung durchgeführt werden kann.

Am ersten Anbindungsabschnitt 40 sind Formschlussausnehmungen 402 als Befestigungsmittel vorgesehen, welche mit dazu komplementären Formschlusselementen 24 der Halteeinrichtung 2 in Eingriff gebracht werden können. Wie sich beispielsweise aus der Figur 2 ergibt, kann das Deformationselement 4 von oben auf die Formschlusselemente 24 mit den Formschlussausnehmungen 402 aufgesteckt werden, so dass sich ein einfaches Befestigungsmittel zur Fixierung des Deformationselements bezüglich dem Halteeinrichtung 2 ergibt.

Das Deformationselement 4 ist weiterhin über einen Montagebolzen 30, welcher radial zur Lenkspindelachse 100 aus der Verlagerungseinrichtung 3 herausragt, mit seinem zweiten Anbindungsabschnitt 42 anbindbar, wobei eine Montagebohrung 422 als Befestigungsmittel in dem zweiten Anbindungsabschnitt 42 vorgesehen ist, welche von dem Montagebolzen 30 durchdrungen wird. Über eine Kontermutter 32 kann dann das Deformationselement 4 festgelegt werden.

Auf diese Weise lässt sich auch die Verlagerungseinrichtung 3 an der Halteeinrichtung 2 auf einfache Weise festlegen, so dass zur Verbindung des Deformationselements 4 sowohl mit der Halteeinrichtung 2 als auch mit der Verlagerungseinrichtung 3 lediglich eine einzige Kontermutter 32 festgezogen werden muss, über welche das Deformationselement 4 sowohl mit der Verlagerungseinrichtung 3 über den zweiten Anbindungsabschnitt 42 als auch mit der Halteeinrichtung 2 über den ersten Anbindungsabschnitt 40 verbunden wird. Gleichzeitig ermöglicht es das Festziehen der Kontermutter 32, die Verlagerungseinrichtung 3 verschiebbar mit der Halteeinrichtung 2 zu verbinden.

In dem in den Figuren 1 bis 3 gezeigten Deformationselement 4 befinden sich damit die jeweiligen Kraftangriffspunkte, also insbesondere der erste Anbindungsabschnitt 40 mit den Formschlussausnehmungen 402 und der zweite Anbindungsabschnitt 42 mit der Montagebohrung 422, in unmittelbarer Nähe sowohl des Deformationsabschnittes 44 als auch der Deformationsachse 400, so dass ein definiertes Verformen des Deformationsabschnittes 44 um die Deformationsachse 400 herum stattfindet.

In den Figuren 5 und 6 ist in einer Detaildarstellung der Lenksäule 1 der Figuren 1 bis 3 die Montage des Deformationselements 4 in einer entsprechenden kanalförmigen Führung 26 der Halteeinrichtung 2 gezeigt, wobei sich der Montagebolzen 30 der Verlagerungseinrichtung 3 durch ein Langloch 28 der Halteeinrichtung 2 hindurch erstreckt und dann entsprechend über den in dieser Form auch als Unterlegscheibe dienenden zweiten Anbindungsabschnitt 42 und die Kontermutter 32 verschiebbar gehalten ist. Ein zweiter Montagebolzen 30 erstreckt sich durch ein weiteres Langloch 28 und ist ebenfalls über eine Kontermutter 32 gesichert.

Die kanalförmige Führung 26 ist U-förmig ausgebildet und weist neben dem Kanalboden 280 auch zwei parallel zueinander ausgerichtete, einander gegenüber liegende Kanalwände 228 auf, welche derart parallel zu dem inneren Bereich 440 und dem äußeren Bereich 442 des Deformationsabschnittes 44 ausgerichtet sind, dass sich sowohl der innere Bereich 440 als auch der äußere Bereich 442 an den Kanalwänden 228 abstützen können.

In Figur 6 ist die Lenksäule 1 in einer verschobenen Stellung gezeigt, in welcher der Deformationsabschnitt 44 um die Deformationsachse 400 herum abgewickelt ist, die Verlagerungseinrichtung 3 entsprechend gegenüber der Halteeinrichtung 2 in Richtung der Fahrzeugfront verschoben ist und entsprechend die Montagebolzen 30 am vorderen Ende der Langlöcher 28 der Halteeinrichtung 2 angekommen sind. Entsprechend hat die Verlagerungseinrichtung 3 gegenüber der Halteeinrichtung 2 einen Verschiebeweg in Richtung der Fahrzeugfront durchgeführt, welcher der Länge der Langlöcher 28 entspricht, und dabei gleichzeitig das Deformationselement 4 in seinem Deformationsabschnitt 44 verformt. Es ergibt sich entsprechend, dass durch die Verformung des Deformationselements 4 in seinem Deformationsabschnitt 44 eine definierte Energieabsorption der eingetragenen Crash-Energie stattgefunden hat.

Das in den Figuren 1 bis 3, 5 und 6 dargestellte Deformationselement 4 weist die Deformationsachse 400 auf, die im Wesentlichen sowohl parallel zur Richtung der Flächennormalen 200 des ersten Anbindungsabschnitt 40, als auch parallel zur Richtung des zweiten Anbindungsabschnittes 42 angeordnet ist.

Darunter, dass die Deformationsachse 400 im Wesentlichen parallel zur Richtung der Flächennormalen 200 angeordnet ist, wird verstanden, dass der Raumwinkel zwischen der Deformationsachse 400 und der Richtung der Flächennormalen 200 in einem Bereich von 0° bis 10° liegt, bevorzugt einem Winkel von 0° bis 5°, besonders bevorzugt bei genau 0° und somit ideal parallel ist.

Die Deformationsachse 400 beziehungsweise die Deformationsachsen 400 des Deformationselements 4 sind entsprechend auch im Wesentlichen parallel angeordnet zu der beispielsweise durch die Montagebolzen 30 definierte Radialrichtung der Verlagerungseinrichtung 3.

Dadurch, dass die Deformationsachse 400 im Wesentlichen parallel zur Richtung der Flächennormalen und somit auch senkrecht zur Verschiebeebene 320 angeordnet ist, kann erreicht werden, dass eine definierte Deformation des Deformationsabschnittes 44 erreicht wird, welche keinen zusätzlichen Bauraum erfordert, sondern sich im Wesentlichen in dem durch das Deformationselement 4 vorgegebenen Bauraum bewegt. Entsprechend resultiert hieraus eine besonders kompakte Bauweise des Deformationselements 4 und damit der gesamten Lenksäule 1. Das Deformationselement 4 kann weiterhin einfach an die jeweiligen Spezifikationen des Kraftfahrzeuges angepasst werden, so dass eine hohe Designfreiheit der Biegelasche beziehungsweise einer entsprechenden Biegereißlasche besteht.

Es ergibt sich weiterhin, dass durch die parallele Anordnung der Deformationsachse 400 bezüglich der Richtung der Flächennormalen 200 eine einfache Montage erreicht werden kann, da ein Einsetzen des Deformationselements 4 in Richtung der Deformationsachse 400 ermöglicht wird, und entsprechend durch einfaches Zusammenstecken der Halteeinrichtung 2, der Verlagerungseinrichtung 3, sowie des Deformationselements 4 und nachfolgendem Fixieren der drei Elemente miteinander über eine einzige Kontermutter 32 der Montageprozess abgeschlossen werden kann.

In Figur 4 ist ein weiteres Ausführungsbeispiel eines Deformationselements 4 vorgesehen, welches einen ersten Anbindungsabschnitt 40 zur Anbindung an eine Halteinrichtung über Formschlussausnehmungen 402, die als Befestigungsmittel dienen, aufweist. Der zweite Anbindungsabschnitt 42 kann über eine Montagebohrung 422 beispielsweise an der Verlagerungseinrichtung 3 angebunden werden. Der erste Anbindungsabschnitt 40 und der zweite Anbindungsabschnitt 42 sind in einer Ebene angeordnet, welche parallel zur Verschiebeebene 320 ausgebildet ist.

Der Deformationsabschnitt 44 ist wiederum so ausgeführt, dass ein innerer Bereich 440 des Deformationsabschnittes 44 direkt an dem zweiten Anbindungsabschnitt 42 angebunden ist und ein äußerer Bereich 442 des Deformationsabschnitts 44 an dem ersten Anbindungsabschnitt 40 angebunden ist. Anstelle einer Reißlinie ist hier ein Schlitz 460 vorgesehen, welcher den Deformationsabschnitt 44 klar vom ersten Anbindungsabschnitt 40 trennt.

Die Deformationsachse 400 ist wiederum im Wesentlichen parallel zu der Richtung der Flächennormalen 200 angeordnet.

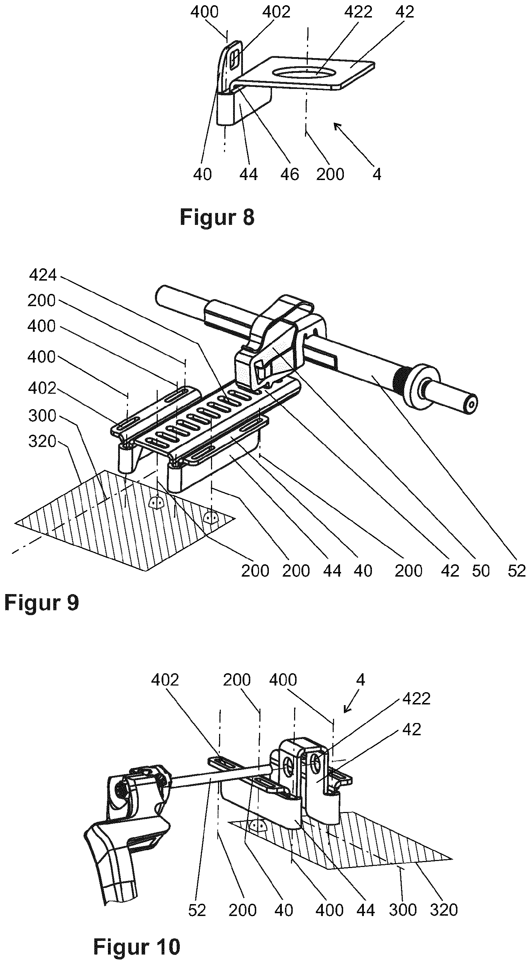

In den Figuren 7 und 8 ist eine Lenksäule 1 in einem weiteren Ausführungsbeispiel gezeigt, wobei die Lenksäule 1 in diesem Ausführungsbeispiel eine Halteeinrichtung 2 in Form einer am Chassis des Kraftfahrzeugs festgelegten Gleitkapsel aufweist, an welcher eine Verlagerungseinrichtung 3 in Form der Lenksäule 1 und insbesondere der Konsole der Lenksäule vorgesehen ist. Im Crash-Fall bewegt sich die Lenksäule 1 und insbesondere die Verlagerungseinrichtung 3 gegenüber den als Gleitkapsel ausgebildeten Halteeinrichtungen 2 in Richtung auf die Fahrzeugfront zu. Um eine definierte Verschiebung der Verlagerungseinrichtung 3 gegenüber der Halteeinrichtung 2 zu erreichen, ist wiederum ein Deformationselement 4 vorgesehen, welches über ein Formschlusselement 34, welches an der Verlagerungseinrichtung 3 angeordnet ist und welches in eine Formschlussausnehmung 402 des Deformationselements 4 eingreift, festgelegt ist. Weiterhin ist eine Montagebohrung 422 vorgesehen, über welche das Deformationselement 4 an der Halteeinrichtung 2 festgelegt ist, indem der Bolzen der Gleitkapsel die Montagebohrung 422 durchdringt.

Ein Deformationsabschnitt 44 ist wiederum vorgesehen, welcher senkrecht zu der Verschiebeebene 320 angeordnet ist.

Die Montagebohrung 422 ist in einem zweiten Anbindungsabschnitt 42 vorgesehen, und die Formschlussausnehmung 402 in einem ersten Anbindungsabschnitt 40 des Deformationselements 4 vorgesehen.

Der Deformationsabschnitt 44 ist direkt mit dem ersten Anbindungsabschnitt 40 angebunden und über eine Reißlinie 46 mit dem zweiten Anbindungsabschnitt 42 verbunden. Eine Umformung des Deformationsabschnittes findet um die durch die Deformationsachse 400 definierte Achse herum statt, wenn eine Relativverschiebung des ersten Anbindungsabschnittes 40 bezüglich des zweiten Anbindungsabschnittes 42 dann stattfindet, wenn die Verlagerungseinrichtung 3 gegenüber der Halteeinrichtung 2 verschoben wird.

In dem Ausführungsbeispiel ist die Deformationsachse 400 parallel zur Richtung der Flächennormalen 200 des zweiten Anbindungsabschnittes 42 ausgerichtet, wobei die Richtung der Flächennormale 200 orthogonal zur Verschiebeebene 320 angeordnet ist.

In Figur 9 ist in einem weiteren Ausführungsbeispiel ein weiteres Deformationselement 4 gezeigt, bei welchem ein erster Anbindungsabschnitt 40 vorgesehen ist, welcher wiederum über Formschlussausnehmungen 402 mit der Verlagerungseinrichtung 3 festlegbar ist. Ein zweiter Anbindungsabschnitt 42 ist vorgesehen, welcher Rastausnehmungen 424 aufweist, welche mit einer Rastklinke 50, die als Befestigungsmittel dient, in Eingriff kommen können. Die Rastklinke 50 wird beispielsweise über eine Klemmachse 52 eines Klemmmechanismus in einer Lenksäule, welche eine Längsverstellung der Verlagerungseinrichtung relativ zur Halteeinrichtung ermöglicht, um eine exakte Positionierung des Lenkrades bezüglich eines Fahrers zu ermöglichen, gehalten. Die Klemmachse 52 trägt die Rastklinke 50 und sorgt dafür, dass die Rastklinke 50 mit ihren entsprechenden Rasthaken in Eingriff mit den Rastausnehmungen 442 in dem zweiten Anbindungsabschnitt 42 des Deformationselements 4 tritt, wenn die Lenksäule beziehungsweise Lenksäulenposition in ihrer Position verriegelt ist. Eine solche Einrichtung ist prinzipiell bekannt.

Der Deformationsabschnitt 44 ist wiederum sowohl mit dem ersten Anbindungsabschnitt 40 als auch mit dem zweiten Anbindungsabschnitt 42 verbunden und so ausgebildet, dass die Deformationsachse 400, um welche herum der Deformationsabschnitt 44 bei einer Relativverschiebung des ersten Anbindungsabschnittes 40 gegenüber dem zweiten Anbindungsabschnitt 42 verformt wird, im Wesentlichen parallel zu der Richtung der Flächennormalen 200 sowohl des ersten Anbindungsabschnittes 40 als auch parallel zu der Richtung der Flächennormalen 200 des zweiten Anbindungsabschnittes 42 angeordnet ist.

Weiterhin ist die Richtung Flächennormalen 200 ist orthogonal zu der Verschiebeebene 320 angeordnet in der die Verschiebeachse 300 liegt.

In Figur 10 ist in einem weiteren Ausführungsbeispiel ein Deformationselement 4 gezeigt, welches einen ersten Anbindungsabschnitt 40 aufweist, welcher über Formschlussausnehmungen 402 verfügt, mittels welchen der erste Anbindungsabschnitt 40 mit der Halteeinrichtung 2 in Eingriff gebracht werden kann. Weiterhin ist ein zweiter Anbindungsabschnitt 42 vorgesehen, welcher Montagebohrungen 422 aufweist, welche über eine Klemmachse 52 mit der Verlagerungseinrichtung 3 in Eingriff gebracht werden können. Der Deformationsabschnitt 44 ist so angeordnet, dass die Deformationsachse 400 im Wesentlichen parallel zur Richtung der Flächennormalen 200 des ersten Anbindungsabschnittes 400 angeordnet ist. Weiterhin ist die Richtung der Flächennormalen des ersten Anbindungsabschnittes 400 orthogonal zur Verschiebeebene 320.

### Bezugszeichenliste

- 1: Lenksäule
- 10: Lenkspindel
- 12: vorderer Abschnitt
- 100: Lenkspindelachse
- 2: Halteeinrichtung
- 20: Montageausnehmung
- 22: Seitenwange
- 24: Formschlusselement
- 26: kanalförmige Führung
- 28: Langloch
- 200: Flächennormale
- 280: Kanalboden
- 282: Kanalwand
- 3: Verlagerungseinrichtung
- 30: Montagebolzen
- 32: Kontermutter
- 34: Formschlusselement
- 300: Verschiebeachse
- 320: Verschiebeebene
- 4: Deformationselement
- 40: erster Anbindungsabschnitt
- 42: zweiter Anbindungsabschnitt
- 44: Deformationsabschnitt
- 46: Reißlinie
- 400: Deformationsachse
- 402: Formschlussausnehmung
- 422: Montagebohrung
- 424: Rastausnehmung
- 440: innerer Bereich
- 442: äußerer Bereich
- 460: Schlitz
- 50: Rastklinke
- 52: Klemmachse

## Patentansprüche

1. Lenksäule (1) für ein Kraftfahrzeug, umfassend eine mit dem Chassis des Kraftfahrzeugs verbindbare Halteeinrichtung (2) und eine im Crash-Fall relativ zur Halteeinrichtung (2) entlang einer Verschiebeachse (300) verschiebbare Verlagerungseinrichtung (3) zur Aufnahme einer Lenkspindel (10), wobei ein Deformationselement (4) mit der Halteeinrichtung (2) und der Verlagerungseinrichtung (3) über einen jeweiligen Anbindungsabschnitt mit jeweiligen Befestigungsmitteln verbunden ist und das Deformationselement (4) einen Deformationsabschnitt (44) aufweist, welcher sich bei der Relativverschiebung der Verlagerungseinrichtung (3) gegenüber der Halteeinrichtung (2) um eine Deformationsachse (400) herum deformiert, wobei die Deformationsachse (400) im Wesentlichen parallel zur Richtung der Flächennormalen (200) zumindest eines Anbindungsabschnitts im Zentrum des zugehörigen Befestigungsmittels ausgerichtet ist, **dadurch gekennzeichnet, dass** das Deformationselement (4) über einen ersten Anbindungsabschnitt (40) an der Halteeinrichtung (2) und über einen zweiten Anbindungsabschnitt (42) an der Verlagerungseinrichtung (3) angeordnet ist, und der erste Anbindungsabschnitt (40) und/oder der zweite Anbindungsabschnitt (42) senkrecht zur Richtung der Flächennormalen (200) ausgebildet sind..

2. Lenksäule (1) gemäß Anspruch 1, **dadurch gekennzeichnet, dass** der Deformationsabschnitt (44) so ausgebildet ist, dass sich die Deformationsachse (400) während der Relativverschiebung der Verlagerungseinrichtung (3) gegenüber der Halteeinrichtung (2) im Wesentlichen parallel zu ihrer Ausgangslage in Richtung der Verschiebeachse (300) bewegt.

3. Lenksäule (1) gemäß Anspruch 1, **dadurch gekennzeichnet, dass** der erste Anbindungsabschnitt (40) und der zweite Anbindungsabschnitt (42) in einer gemeinsamen Ebene angeordnet sind.

4. Lenksäule (1) gemäß einem der vorstehenden Ansprüche, **dadurch gekennzeichnet, dass** der Deformationsabschnitt (44) um die Deformationsachse (400) herum auf sich zurückgebogen ist und einen inneren Bereich (440) und einen äußeren Bereich (442) aufweist, welche einander gegenüber liegen und welche parallel zu einer durch die Deformationsachse (400) und die Verschiebeachse (300) aufgespannten Ebene liegen.

5. Lenksäule (1) gemäß einem der vorstehenden Ansprüche, **dadurch gekennzeichnet, dass** der erste Anbindungsabschnitt (40) und/oder der zweite Anbindungsabschnitt (42) Formschlussausnehmungen (402) aufweist, welche mit dazu komplementären Formschlusselementen (24, 34) der Halteeinrichtung (2) und/oder der Verlagerungseinrichtung (3) in Eingriff stehen.

6. Lenksäule (1) gemäß einem der vorstehenden Ansprüche, **dadurch gekennzeichnet, dass** zwei Deformationsabschnitte (44) vorgesehen sind, welche beide an dem zweiten Anbindungsabschnitt (42) angebunden sind und jeweils einen ersten Anbindungsabschnitt (40) aufweisen.

7. Lenksäule (1) gemäß Anspruch 6, **dadurch gekennzeichnet, dass** die beiden Deformationsabschnitte (44) parallel zueinander ausgerichtet sind und der erste Anbindungsabschnitt (40) und der zweite Anbindungsabschnitt (42) senkrecht zu den durch die Deformationsabschnitte (44) ausgebildeten Ebenen angeordnet sind.

8. Lenksäule (1) gemäß einem der vorstehenden Ansprüche, **dadurch gekennzeichnet, dass** der Deformationsabschnitt (44) senkrecht zur Verschieberichtung (300) neben dem ersten Anbindungsabschnitt (40) und dem zweiten Anbindungsabschnitt (42) angeordnet ist.

9. Lenksäule (1) gemäß einem der vorstehenden Ansprüche, **dadurch gekennzeichnet, dass** der erste Anbindungsabschnitt (40) oder der zweite Anbindungsabschnitt (42) Rastausnehmungen (442) zur Aufnahme einer Rastklinke (50) in einer in der Längsrichtung verstellbaren Lenksäule aufweist und/oder der erste Anbindungsabschnitt (40) oder der zweite Anbindungsabschnitt (42) Montagebohrungen (422) zur Aufnahme einer Klemmachse (52) in einer in Längsrichtung verstellbaren Lenksäule aufnimmt.

## Claims

1. Steering column (1) for a motor vehicle, comprising a holding device (2) which is connectable to the chassis of the motor vehicle, and a shifting device (3) which, in the event of a crash, is displaceable relative to the holding device (2) along a displacement axis (300), for accommodating a steering spindle (10), wherein a deformation element (4) is connected to the holding device (2) and to the shifting device (3) via a respective connection portion with respective fastening means, and the deformation element (4) comprises a deformation portion (44) which is deformed about a deformation axis (400) during the relative displacement of the shifting device (3) in relation to the holding device (2), wherein the deformation axis (400) is oriented substantially parallel to the direction of the surface normal (200) of at least one connection portion in the center of the associated fastening means, **characterized in that** the deformation element (4) is arranged on the holding device (2) via a first connection portion (40) and on the shifting device (3) via a second connection portion (42), and the first connection portion (40) and/or the second connection portion (42) are formed perpendicular to the direction of the surface normal (200).

2. Steering column (1) according to Claim 1, **characterized in that** the deformation portion (44) is designed in such a manner that, during the relative displacement of the shifting device (3) in relation to the holding device (2), the deformation axis (400) moves in the direction of the displacement axis (300) in a manner substantially parallel to its starting position.

3. Steering column (1) according to Claim 1, **characterized in that** the first connection portion (40) and the second connection portion (42) are arranged in a common plane.

4. Steering column (1) according to one of the preceding claims, **characterized in that** the deformation portion (44) is bent back around the deformation axis (400) and comprises an inner region (440) and an outer region (442) which lie opposite each other and which lie parallel to a plane spanned by the deformation axis (400) and the displacement axis (300).

5. Steering column (1) according to one of the preceding claims, **characterized in that** the first connection portion (40) and/or the second connection portion (42) comprise/comprises form-fitting recesses (402) which are in engagement with mutually complementary form-fitting elements (24, 34) of the holding device (2) and/or of the shifting device (3).

6. Steering column (1) according to one of the preceding claims, **characterized in that** two deformation portions (44) are provided which are both connected to the second connection portion (42) and each comprise a first connection portion (40) .

7. Steering column (1) according to Claim 6, **characterized in that** the two deformation portions (44) are oriented parallel to each other, and the first connection portion (40) and the second connection portion (42) are arranged perpendicular to the planes formed by the deformation portions (44) .

8. Steering column (1) according to one of the preceding claims, **characterized in that** the deformation portion (44) is arranged perpendicular to the displacement direction (300) next to the first connection portion (40) and to the second connection portion (42).

9. Steering column (1) according to one of the preceding claims, **characterized in that** the first connection portion (40) or the second connection portion (42) comprises latching recesses (442) for receiving a latch (50) in a steering column which is adjustable in the longitudinal direction, and/or the first connection portion (40) or the second connection portion (42) incorporates mounting bores (422) for receiving a clamping spindle (52) in a steering column which is adjustable in the longitudinal direction.

## Revendications

1. Colonne de direction (1) pour un véhicule automobile, comprenant un dispositif de maintien (2) pouvant être assemblé au châssis du véhicule automobile et un dispositif de déplacement (3) déplaçable par rapport au dispositif de maintien (2) le long d'un axe de déplacement (300) en cas de collision pour la réception d'une broche de direction (10), dans laquelle un élément de déformation (4) est relié au dispositif de maintien (2) et au dispositif de déplacement (3) au moyen d'une partie de liaison respective par des moyens de fixation respectifs et l'élément de déformation (4) présente une partie de déformation (44), qui se déforme autour d'un axe de déformation (400) lors du déplacement relatif du dispositif de déplacement (3) par rapport à l'élément de maintien (2), dans laquelle l'axe de déformation (400) est orienté essentiellement parallèlement à la direction de la normale (200) à la surface d'au moins une partie de liaison au centre du moyen de fixation correspondant, **caractérisée en ce que** l'élément de déformation (4) est disposé sur le dispositif de maintien (2) au moyen d'une première partie de liaison (40) et sur le dispositif de déplacement (3) au moyen d'une deuxième partie de liaison (42), et la première partie de liaison (40) et/ou la deuxième partie de liaison (42) est/sont perpendiculaire(s) à la direction de la normale (200) à la surface.

2. Colonne de direction (1) selon la revendication 1, **caractérisée en ce que** la partie de déformation (44) est configurée de telle manière que l'axe de déformation (400) se déplace essentiellement parallèlement à sa position initiale dans la direction de l'axe de déplacement (300) pendant le déplacement relatif du dispositif de déplacement (3) par rapport au dispositif de maintien (2).

3. Colonne de direction (1) selon la revendication 1, **caractérisée en ce que** la première partie de liaison (40) et la deuxième partie de liaison (42) sont disposées dans un plan commun.

4. Colonne de direction (1) selon l'une quelconque des revendications précédentes, **caractérisée en ce que** la partie de déformation (44) est repliée sur elle-même autour de l'axe de déformation (400) et présente une région intérieure (440) et une région extérieure (442), qui sont opposées l'une à l'autre et qui sont parallèles à un plan passant par l'axe de déformation (400) et l'axe de déplacement (300).

5. Colonne de direction (1) selon l'une quelconque des revendications précédentes, **caractérisée en ce que** la première partie de liaison (40) et/ou la deuxième partie de liaison (42) présente(nt) des évidements d'assemblage par emboîtement (402), qui sont en prise avec des éléments d'assemblage par emboîtement (24, 34) du dispositif de maintien (2) et/ou du dispositif de déplacement (3), complémentaires à ceux-ci.

6. Colonne de direction (1) selon l'une quelconque des revendications précédentes, **caractérisée en ce qu'**il est prévu deux parties de déformation (44), qui sont toutes les deux reliées à la deuxième partie de liaison (42) et qui présentent respectivement une première partie de liaison (40).

7. Colonne de direction (1) selon la revendication 6, **caractérisée en ce que** les deux parties de déformation (44) sont orientées parallèlement l'une à l'autre et la première partie de liaison (40) et la deuxième partie de liaison (42) sont disposées perpendiculairement aux plans formés par les parties de déformation (44).

8. Colonne de direction (1) selon l'une quelconque des revendications précédentes, **caractérisée en ce que** la partie de déformation (44) est disposée perpendiculairement à la direction de déplacement (300) à côté de la première partie de liaison (40) et de la deuxième partie de liaison (42).

9. Colonne de direction (1) selon l'une quelconque des revendications précédentes, **caractérisée en ce que** la première partie de liaison (40) ou la deuxième partie de liaison (42) présente des évidements d'encliquetage (442) destinés à recevoir un cliquet (50) dans une colonne de direction réglable dans la direction longitudinale et/ou la première partie de liaison (40) ou la deuxième partie de liaison (42) comporte des trous de montage (422) destinés à recevoir un axe de serrage (52) dans une colonne de direction réglable dans la direction longitudinale.
